# EUROPEAN PATENT APPLICATION

(11) **EP 2 378 396 A1**
(43) Date of publication of application: **19.10.2011**
(21) Application number: 10160083.1
(22) Date of filing: 15.04.2010
(51) Int. Cl.: G06F 3/02, G06F 3/01

(54) **World keyboard and auxiliary**

(71) Applicant: Hung, M Chao Jung, South Dist Taichung City (TW)
(72) Inventor: Hung, M Chao Jung, South Dist Taichung City (TW)
(74) Representative: Chaillot, Geneviève

(57) **Abstract**

A world keyboard and its auxiliary include a keyboard and a diaphragm cover. The diaphragm cover has a plurality of protrudent diaphragm key matching to all the keys of the keyboard. The diaphragm cover can be covered upon the keyboard and the printings on the keys. Large-size symbols of an input method for a language are printed on corresponding keys of the keyboard and diaphragm keys of the diaphragm cover. Or, symbols of multiple input methods for a language are printed on corresponding keys and diaphragm keys, and symbols of one of the input methods are printed larger. Or, symbols of multiple input methods for a language are printed on corresponding keys and diaphragm keys, and symbols of at least one input method are printed larger. Through the diaphragm covers and the keyboard, different input methods for different languages can be applied to a computer system. Once the language of computer system is changed, user can easily find out corresponding key locations of symbols of the input method.

## Description

### FIELD OF THE INVENTION

The present invention relates to keyboard, and particular to a world keyboard and its auxiliary assist user to learn key locations corresponding to input methods for language of the computer system.

### DESCRIPTION OF THE PRIOR ART

Computer is a major invention of American in the modern age. English can be regarded as a default language to computer system. Therefore, English alphabets with input method symbols for local language are printed on keys of keyboard. However, chances for applying foreign language to computers are increasing for frequently international trading and traveling. Methods for different languages are software or function for computers such as the language option of the control panel of the most popular Windows system, user could change system language to Chinese, Japanese, Korean, Hindi, or other languages by choosing from the above setting. But the keyboard of the computer can not support all the input method for different languages. To label the keys of the keyboard for different input methods manually is hard and laborious for the users.

It is also not easily to prepare different keyboard for different input methods or languages on hands while traveling. It is also impossible for changing the keyboard of a laptop.

For students major in foreign languages such as German or Japanese, different keyboards will be needed while switching between the foreign language and local language for the computer systems.

Except those professional capable of typing without seeing the keyboard, normal user will still need to see the symbols on the keyboard. For the most of the keyboard, English alphabets are still the most obvious printing on the keyboard. Such keyboards might not suitable for users of other input methods.

Therefore, the inventor provide a world keyboard and its auxiliary for providing solution for above problems and it is effectively achieved the target.

### SUMMARY OF THE PRESENT INVENTION

According, the primary object of the present invention is to provide a world keyboard and its auxiliary to support the switching of a computer system language.

Another object of the present invention is to provide obvious printing of other input methods for specific users.

### DETAILED DESCRIPTION OF THE IVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

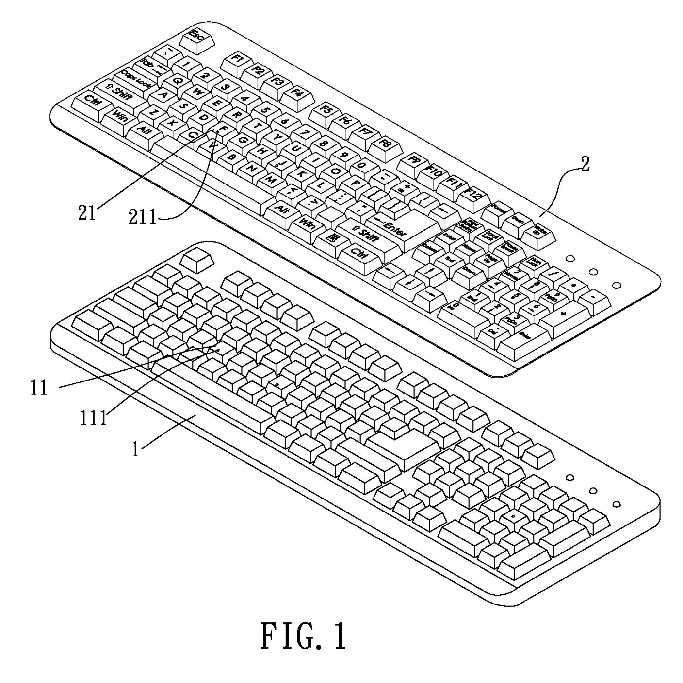

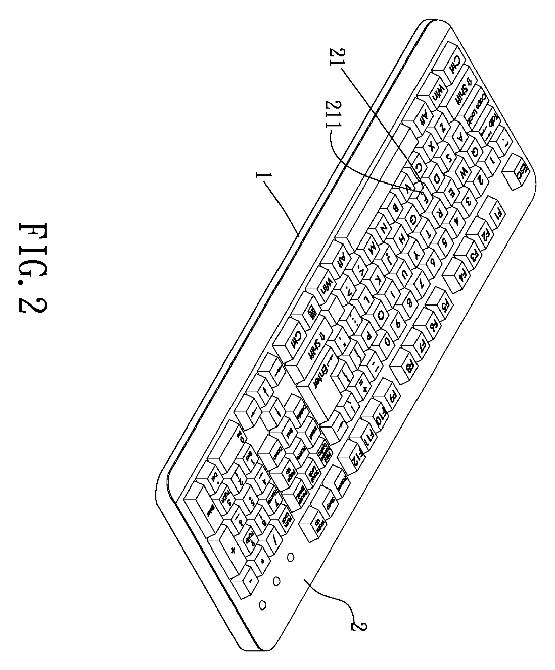

Referring to Fig. 1, an embodiment of the present invention is illustrated. A World language keyboard and its auxiliary include a keyboard 1 having a plurality of key 11. Symbols are printed on a surface of the keys. A diaphragm cover 2 has a plurality of protrudent diaphragm key 21 matching all the keys 11 of the keyboard 1. The diaphragm cover 2 can be covered upon the keyboard 1 so that each of the diaphragm key 21 can be covered upon the corresponding key 11 of the keyboard 1. The printings on the diaphragm keys 21 will also cover the origin printings on the keys 11. Moreover, for the keys 11 (the F and J keys) having a protrudent positioning mark 111, the corresponding diaphragm keys 21 also have protrudent positioning marks 211. The covering of the diaphragm cover 2 upon the keyboard 1 is illustrated in Fig. 2.

Therefore, each diaphragm key 21 of the diaphragm cover 2 and key 11 of the keyboard 1 will have a printed symbol of an input method for a language in a large size, or symbols of various input methods for a language and one of the input methods is printed in a larger size, or symbols of various input methods for a language and at least one of the input methods is printed in a larger size.

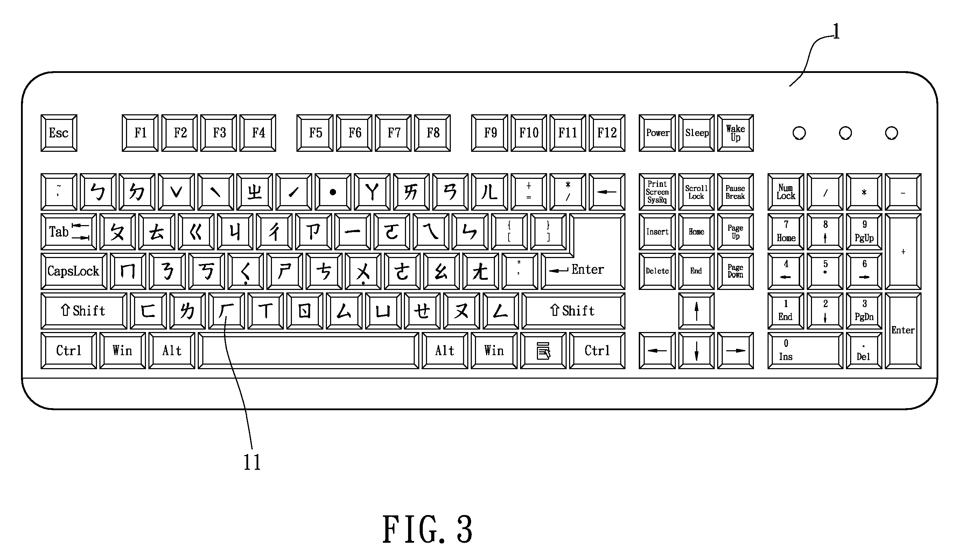

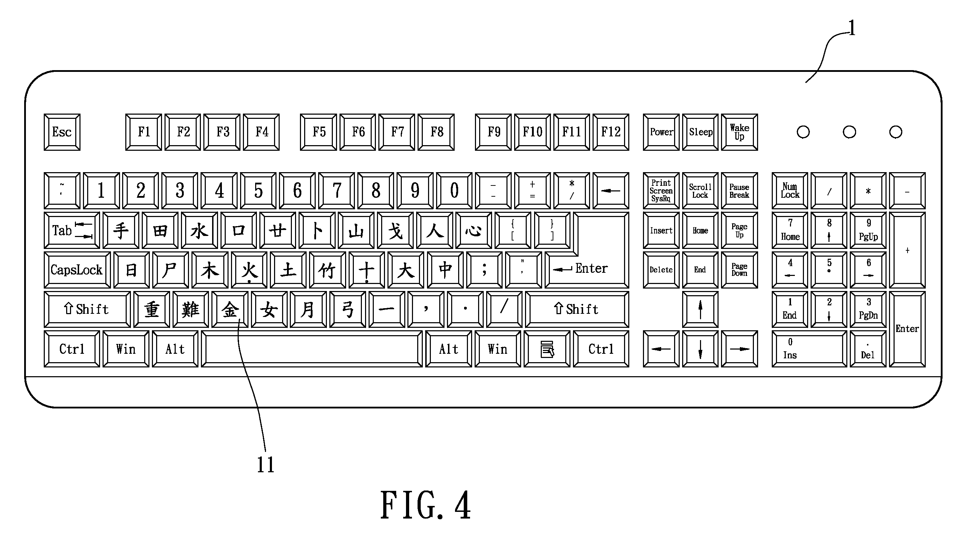

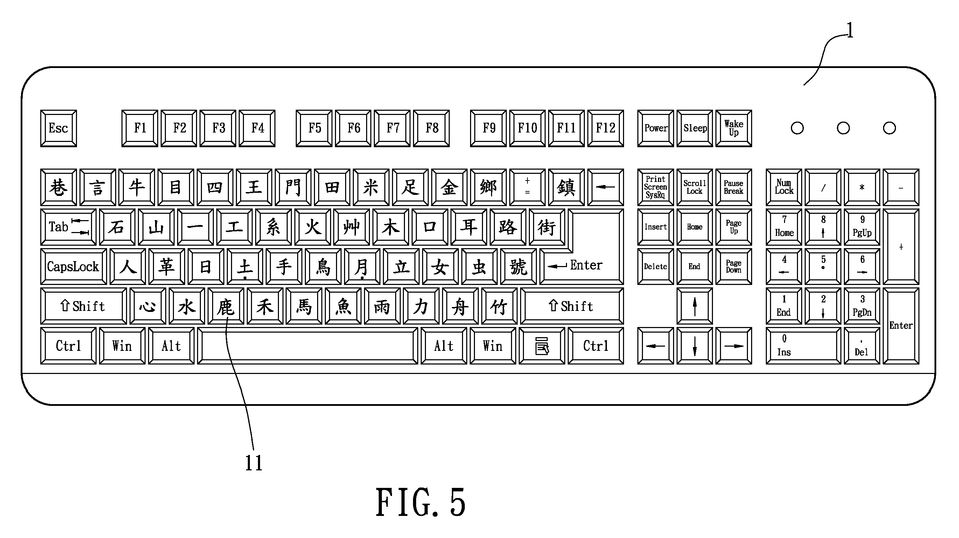

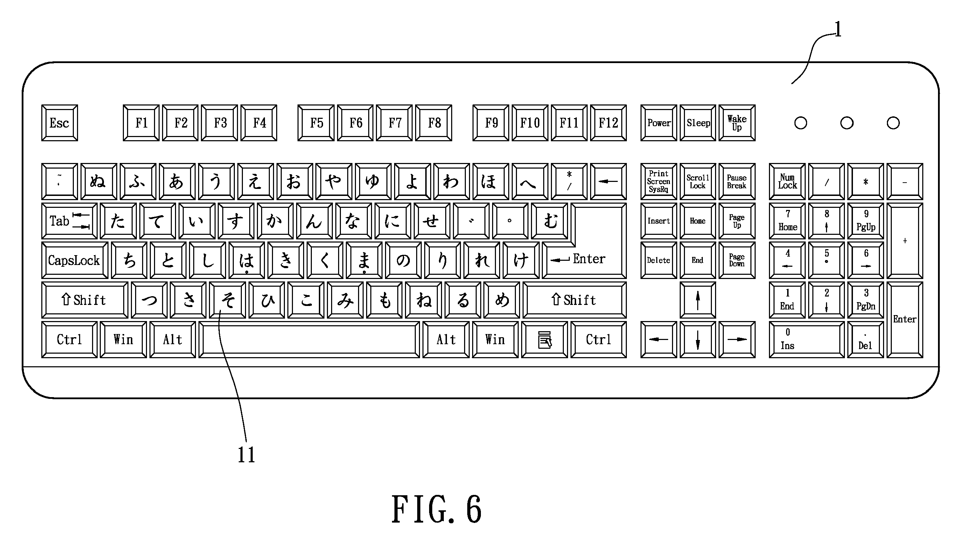

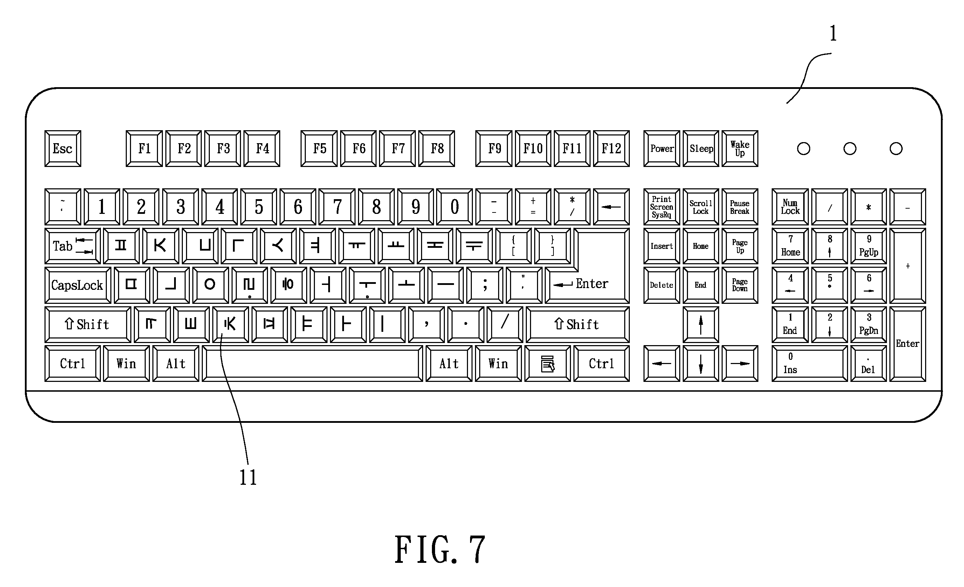

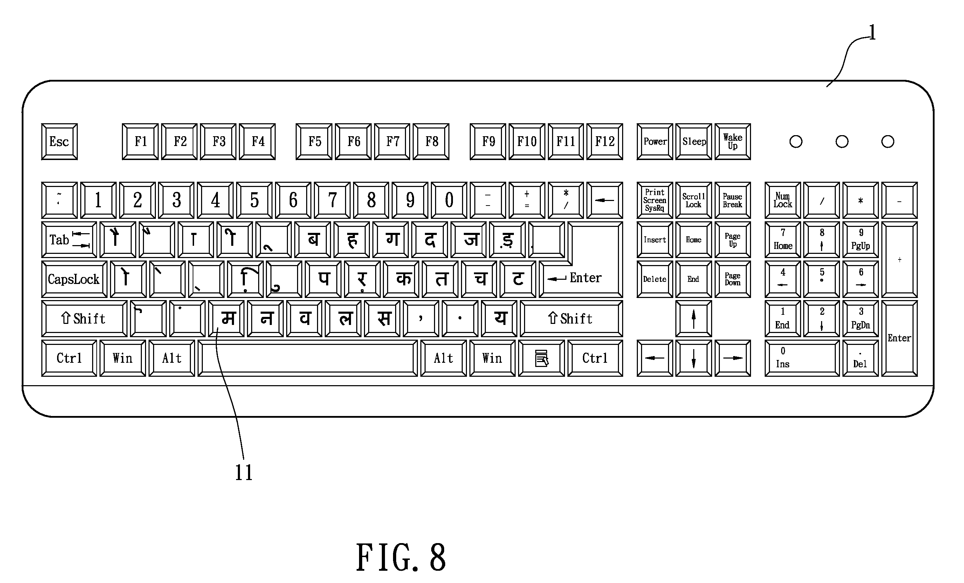

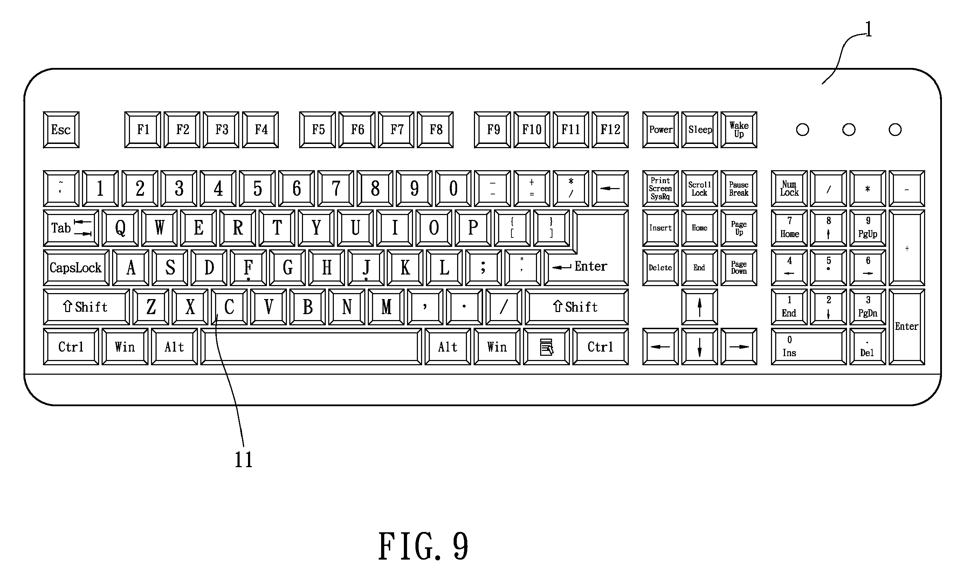

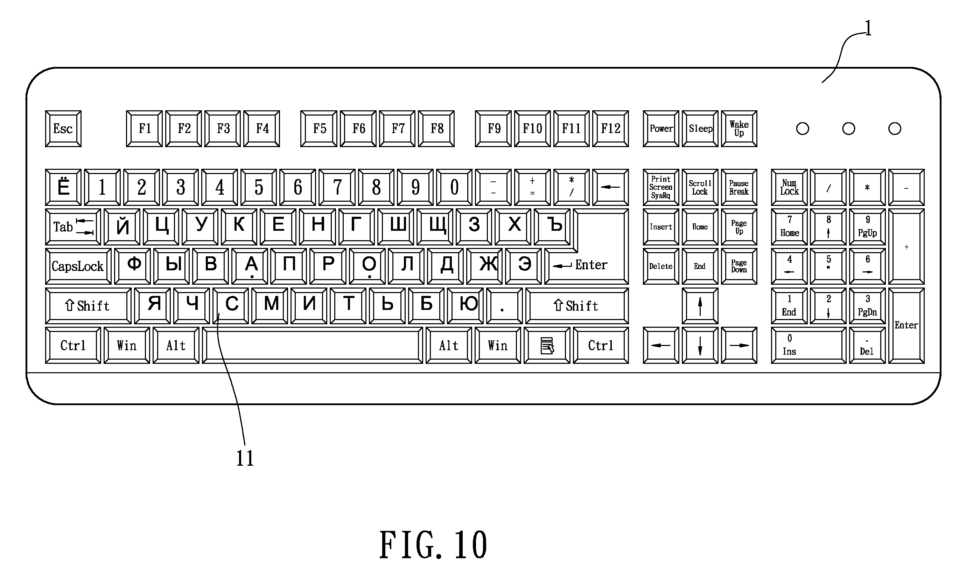

Therefore, through the keyboard 1 and the diaphragm cover 2, different input methods of languages can be applied to the computer. While the language and input method are changed to the computer system, user can easily learns symbols of an input method for the language represented through the keys 11 of on the keyboard 1. Except the native language symbols printed on the keys 11 of the keyboard 1, diaphragm covers 2 for other input methods or other languages can be prepared for the needs. For example, common input methods for traditional Chinese such as phonetic symbol, Chang Jie, or Dayi input method can be printed to the diaphragm keys 21 in a large size. Referring to Figs. 3 to 13, keyboards 1 for different languages are illustrated. Referring to Fig. 3, Chinese phonetic symbols are printed in large size to keys 11 of the keyboard 1. While trying to use Chang Jei input method, a diaphragm cover 2 for Chang Jei input method can be arranged to the keyboard 1. Referring to Fig. 4, the Chang Jei input method symbols are printed to the keyboard 1 in a large size. Referring to Fig. 5, the Dayi input method symbols are printed to the keyboard 1 in a large size.

Moreover, the diaphragm keys 21 of the diaphragm cover 2 can have printed symbols for input methods of other foreign language from the keyboard 1 such as Japanese, Korean, Hindi, English, or other languages. Through covering the diaphragm cover 2 for a language to the keyboard 1 and changing the language of the operation system, user can perform input without problem.

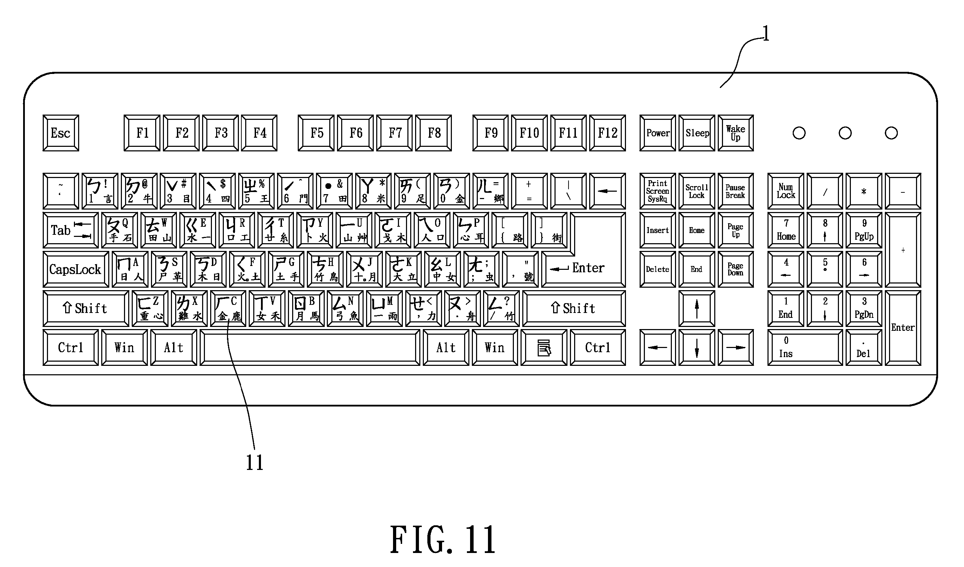

Another embodiment of the present invention is to print multiple input methods for a language and English alphabets of to keys 11 of the keyboard 1 and the diaphragm keys 21 of the diaphragm cover 2, and one of the input methods is printed in larger size. Referring to Fig. 11, common input methods of phonetic symbols, Chang Jei, and Dayi method for traditional Chinese and English alphabets are printed on the keys 11. However, the phonetic symbols are printed in a larger size so that user familiar with phonetic symbol method can easily find symbols on the keyboard than on a keyboard which has English alphabets in a large size.

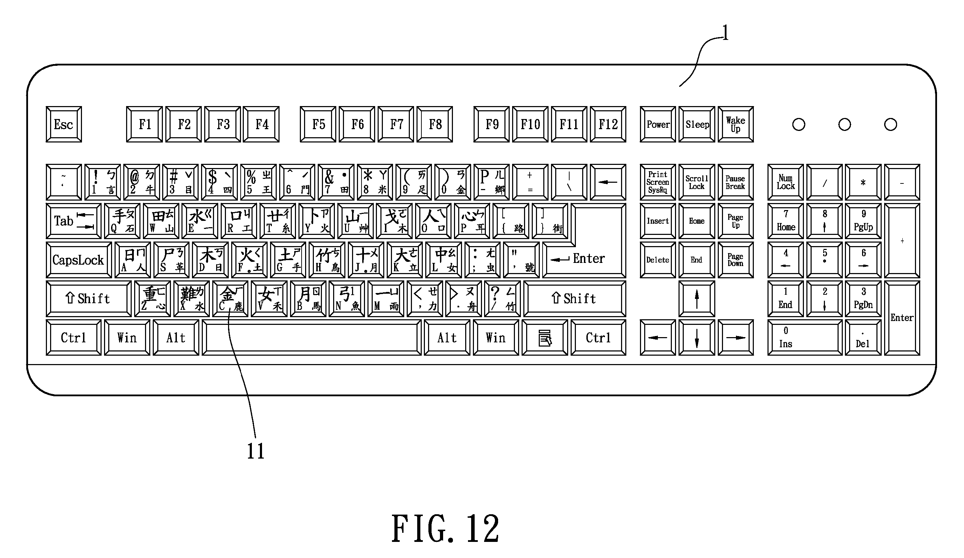

Referring to Fig. 12, the Chang Jei method is printed in a large size. Through such keyboard 1 or such diaphragm cover 2 covering to the keyboard 1, a Chang Jei user can easily find the symbols.

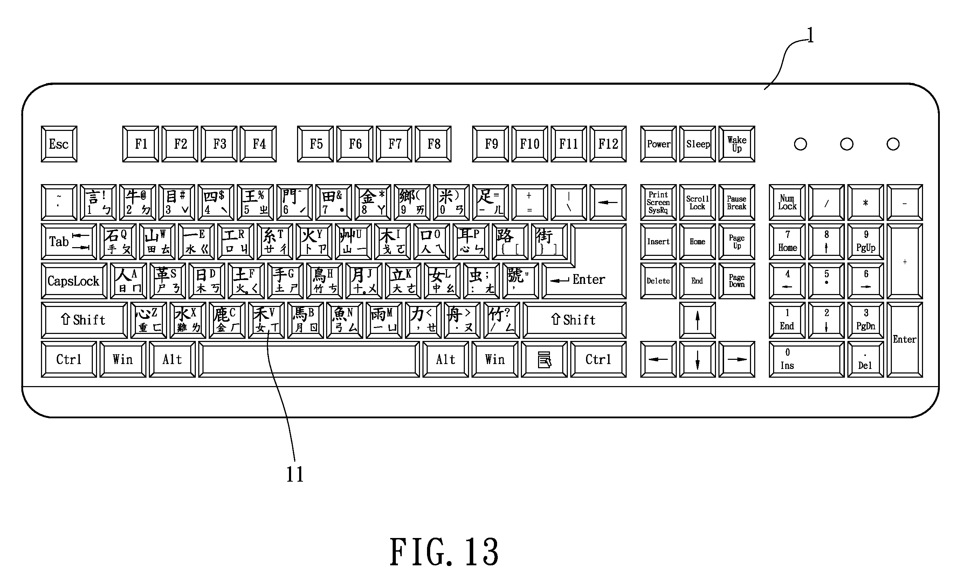

Referring to Fig. 13, the Dayi method is printed in a large size. Through such keyboard 1 or such diaphragm cover 2 covering to the keyboard 1, a Dayi user can easily find the symbols.

Through the present invention, user could find symbols of familiar method especially for the users having poor eyesight. For international travelers or students majoring in foreign language, the corresponding diaphragm covers 2 will help to rapidly change the input method. The diaphragm cover 2 is light, portable, and can be mass-produced at low cost. The present invention is good for the computer users or international guests in hotels.

The diaphragm cover 2 of the present invention further protects the keyboard from dust.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

### BRIEF DESCRIPTION OF THE DRAWINGS

Fig. 1 is a schematic view showing an embodiment of the present invention.
Fig. 2 is a schematic view showing a covering of the present invention upon a keyboard.
Fig. 3 is a schematic view showing an embodiment 1 of the present invention (for keyboard).
Fig. 4 is a schematic view showing an embodiment 2 of the present invention (for keyboard).
Fig. 5 is a schematic view showing an embodiment 3 of the present invention (for keyboard).
Fig. 6 is a schematic view showing an embodiment 4 of the present invention (for keyboard).
Fig. 7 is a schematic view showing an embodiment 5 of the present invention (for keyboard).
Fig. 8 is a schematic view showing an embodiment 6 of the present invention (for keyboard).
Fig. 9 is a schematic view showing an embodiment 7 of the present invention (for keyboard).
Fig. 10 is a schematic view showing an embodiment 8 of the present invention (for keyboard).
Fig. 11 is a schematic view showing an embodiment 9 of the present invention (for keyboard).
Fig. 12 is a schematic view showing an embodiment 10 of the present invention (for keyboard).
Fig. 13 is a schematic view showing an embodiment 11 of the present invention (for keyboard).

## Claims

1. A world language keyboard comprising:
a keyboard having a plurality of key; each key of the keyboard having a printed symbol of an input method for a language in a large size.

2. The world language keyboard as claimed in claim 1, wherein each key has a plurality of printed symbol of the plurality of input method for a language; one of the input methods is printed in a larger size.

3. The world language keyboard as claimed in claim 1, wherein each key has a plurality of printed symbol of the plurality of input method for a language; at least one of the input methods is printed in a larger size.

4. The world language keyboard as claimed in claim 1, wherein each key has a plurality of printed symbol of the plurality of input method for a language including English; one of the input methods for the language is printed in a larger size.

5. A world language keyboard auxiliary comprising:
a diaphragm cover having a plurality of diaphragm key matching to all the key of a keyboard; surfaces of the plurality of diaphragm keys sheltering original printings on keys of the keyboard;
wherein each diaphragm key of the diaphragm cover has printed symbol of an input method for a language in a large size.

6. The world language keyboard auxiliary as claimed in claim 5, wherein each key has a plurality of printed symbol of the plurality of input method for a language; one of the input methods is printed in a larger size.

7. The world language keyboard auxiliary as claimed in claim 5, wherein each key has a plurality of printed symbol of the plurality of input method for a language; at least one of the input methods is printed in a larger size.

8. The world language keyboard auxiliary as claimed in claim 5, wherein each key has a plurality of printed symbol of the plurality of input method for a language including English; one of the input methods for the language is printed in a larger size.

9. The world language keyboard auxiliary as claimed in claim 5, wherein the diaphragm keys corresponding to the keys having a protrudent positioning mark also have protrudent positioning marks.
